(19) 

Europäisches
Patentamt
European
Patent Office
Office européen
des brevets

(11) **EP 4 675 455 A1**

(12) **EUROPEAN PATENT APPLICATION**
published in accordance with Art. 153(4) EPC

(43) Date of publication:
**07.01.2026 Bulletin 2026/02**

(21) Application number: **24764289.5**

(22) Date of filing: **01.03.2024**

(51) International Patent Classification (IPC):
**G06F 16/24** (2019.01)     **G06F 16/176** (2019.01)
**G06F 21/62** (2013.01)     **G06F 7/16** (2006.01)

(52) Cooperative Patent Classification (CPC):
**G06F 7/16; G06F 16/176; G06F 16/22; G06F 16/24;
G06F 16/242; G06F 16/2455; G06F 21/62**

(86) International application number:
**PCT/SG2024/050117**

(87) International publication number:
**WO 2024/181926 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.03.2023  CN 202310189039**

(71) Applicant: **Lemon Inc.
Grand Cayman, KY1-1205 (KY)**

(72) Inventors:
• **NIU, Yongchuan**
  **Beijing 100028 (CN)**
• **WANG, Li**
  **Beijing 100028 (CN)**
• **YAN, Qiang**
  **Beijing 100028 (CN)**

(74) Representative: **Grünecker Patent- und
Rechtsanwälte
PartG mbB
Leopoldstraße 4
80802 München (DE)**

(54) **DATA QUERY METHOD AND APPARATUS, AND DEVICE AND STORAGE MEDIUM**

(57)     Embodiment of the present disclosure provides method, apparatus, device and storage medium for data query. In the method, first data is obtained by a first device based on a request for a data query, where the request indicates a first data attribute to be classified and aggregated and at least a second data attribute and a third data attribute for classification, and the first data at least includes data associated with a second data attribute; and a third data fragment of a result of the data query is generated based on the first data fragment of the first data and the second data fragment of the second data received from the second device, where the second data at least includes data associated with the third data attribute, and the third data fragment includes an element corresponding to the first data attribute that is classified and aggregated based on at least the second data attribute and the third data attribute.

FIG. 2

## Description

This application claims the benefit of Chinese Patent Application No. 202310189039.1, filed on March 1, 2023, entitled "Method, Apparatus, Device, and Storage Medium for Data Query", the entire contents of which are incorporated herein by reference.

## FIELD

Example embodiments of the present disclosure generally relate to the field of computers, and in particular, to method, apparatus, device, and storage medium for data query.

## BACKGROUND

Data is used as a production element, plays an increasingly important role in social life, and data flow cooperation is a precondition that data plays a great value. Nowadays, different data is often owned by different owners, and isolated data island phenomenon is ubiquitous. Therefore, collaborative analysis of data needs to be completed under a condition of ensuring data security of all parties, and the data value is exerted. Secure multi-party computation (SMPC) technology is a common technology to solve the problem of data flow. However, as data volume increases, computational complexity and communication complexity of the technology are significantly increased.

## SUMMARY

In a first aspect of the present disclosure, a method for data query is provided. The method comprises: obtaining first data, by a first device, based on a request for a data query, wherein the request indicates a first data attribute to be classified and aggregated and at least a second data attribute and a third data attribute for the classification, and the first data at least comprises data associated with the second data attribute; and generating, based on a first data fragment of the first data and a second data fragment of second data received from a second device, a third data fragment of a result of the data query, wherein the second data at least comprises data associated with the third data attribute, and the third data fragment comprises an element corresponding to the first data attribute that is classified and aggregated based on at least the second data attribute and the third data attribute.

In a second aspect of the present disclosure, there is provided an apparatus for data query, comprising: an obtaining module configured to obtain first data, by a first device, based on a request for a data query, wherein the request indicates a first data attribute to be classified and aggregated and at least a second data attribute and a third data attribute for the classification, and the first data at least comprises data associated with the second data attribute; and a first generation module configured to generate a third data fragment of a result of the data query based on a first data fragment of the first data and a second data fragment of second data received from a second device, wherein the second data at least comprises data associated with the third data attribute, and the third data fragment comprises an element corresponding to the first data attribute that is classified and aggregated based on at least the second data attribute and the third data attribute.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium stores a computer program, and the computer program is executable by the processor to implement the method of the first aspect.

In a fifth aspect of the present disclosure, a computer program product is provided. The computer program product includes computer-executable instructions that, when executed by a processor, implement the method of the first aspect.

It should be understood that the content described in this section is not intended to limit the key features or important features of the embodiments of the present disclosure, nor is it intended to limit the scope of the present disclosure. Other features of the present disclosure will become readily understood from the following description.

## BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:

FIG. 1 illustrates a schematic diagram of an example environment in which embodiments of the present disclosure can be implemented;

FIG. 2 illustrates a schematic diagram of a multi-party data query process according to some embodiments of the present disclosure;

FIG. 3 illustrates a flowchart of a data query method according to some embodiments of the present disclosure;

FIG. 4 is a schematic structural block diagram of a data query apparatus according to some embodiments of the present disclosure; and

FIG. 5 shows a block diagram of an electronic device that can be used to implement some embodiments of the present disclosure.

## DETAILED DESCRIPTION

Embodiments of the present disclosure will be described in more detail below with reference to the accompanying drawings. While some embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for exemplary purposes only and are not intended to limit the scope of the present disclosure.

In the description of the embodiments of the present disclosure, the terms "comprise" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

The term "in response to" means that a corresponding event occurs or condition is satisfied. It will be appreciated that the timing of execution of subsequent actions performed in response to the event or condition is not necessarily strongly correlated with the time when the event occurs or the condition is satisfied. In some cases, subsequent actions may be performed immediately after an event occurs or a condition is satisfied; in other cases, subsequent actions may also be performed after a period of time after an event occurs or a condition is satisfied.

It may be understood that data involved in the technical solution (including but not limited to the data itself, the obtaining or use of the data) should follow the requirements of the corresponding laws and regulations and related regulations.

It can be understood that, before the technical solutions disclosed in embodiments of the present disclosure are used, the types of personal information related to the present disclosure, the usage scope, the usage scenario and the like should be notified to the user in an appropriate manner according to the relevant laws and regulations, and the authorization of the user is obtained.

For example, in response to receiving an active request from a user, prompt information is sent to the user to explicitly prompt the user that the requested operation will need to obtain and use personal information of the user, so that the user can autonomously select whether to provide personal information to software or hardware executing the operation of the technical solution of the present disclosure according to the prompt information.

As an optional but non-limiting implementation, in response to receiving an active request of the user, a manner of sending prompt information to the user may be, for example, a pop-up window, and prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process are merely illustrative, and do not constitute a limitation on implementations of the present disclosure, and other manners of meeting related laws and regulations may also be applied to implementations of the present disclosure.

As described above, since different data is often grasped by different owners, collaborative analysis of data needs to be completed under the condition of ensuring data security of all parties. The multi-party data joint analysis based on the SMPC technology is a common mode for solving the problem of data circulation and exerting data value. However, as data volume increases, the computational complexity and communication complexity of this manner are significantly increased. In order to meet actual service requirements, an efficient joint query protocol needs to be designed.

Multi-party database queries based on structured query language (SQL) have application values in many application scenarios. In a traditional database query scenario, data in a relationship table or another table form is grasped by a same data owner, and query analysis may be performed using a traditional SQL query engine. However, in a multi-party database query scenario, the relationship table (or data) is grasped by different data owners, a secure query protocol of multiple parties needs to be designed, to complete query analysis under the condition of ensuring data security.

Embodiment of the invention provides a data query scheme, which is used for realizing aggregation query of multi-party data. According to this scheme, a participant of the multi-party security query may perform an operation according to the aggregation query protocol proposed herein, and infer information of other participants according to the data generated in the operation, to obtain a query result. According to the scheme, the aggregation query process based on multi-party security calculation is realized, and the problem of joint query in a multi-party scene is effectively solved.

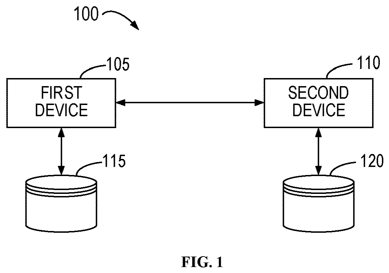

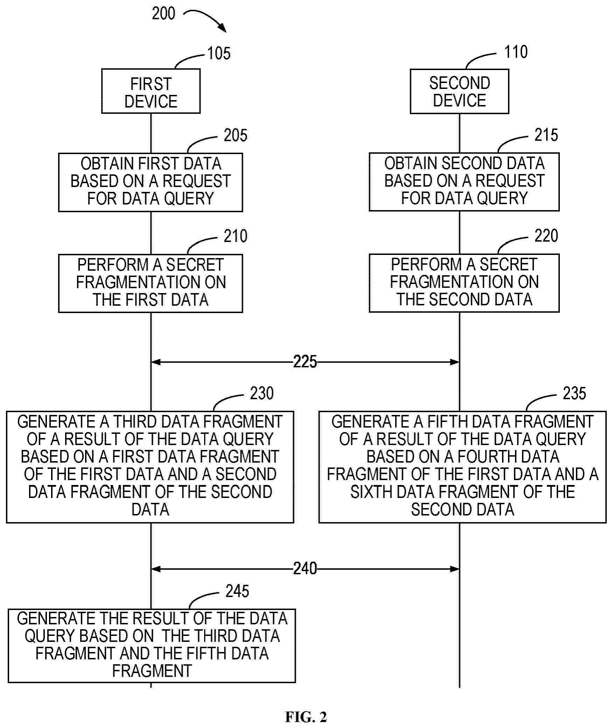

Some example implementations of the present disclosure will be discussed below in conjunction with FIGS. 1 and 2.

FIG. 1 illustrates a schematic diagram of an example environment 100 in which embodiments of the present disclosure can be implemented.

A plurality of devices, such as a first device 105 and a second device 110, may be included in the environment 100. These devices may be any type of device, including terminal devices and servers. The terminal device may include, but is not limited to, a mobile device, a fixed device, or a portable device, or the like, including a cell phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an e-book device, a virtual reality (VR) kiosk, a game console, a game book, or any combination of the foregoing, including accessories and peripherals of these devices, or any combination thereof. In some embodiments, the terminal device can also support any type of interface for a user (such as a "wearable" circuit, and the like).

A server may include, but is not limited to, a mainframe, an edge computing node, a rack server, a router computer, a server computer, a personal computer, a mainframe computer, a laptop computer, a tablet computer, a desktop computer, or the like. In some embodiments, the server may be implemented as a virtual machine, a container, or a bare metal server.

A plurality of databases, such as a first database 115 and a second database 120, may also be included in the environment 100. The first device 105 and the second device 110 may obtain data from the first database 115 and the second database 120, respectively, and store the data into the first database 115 and the second database 120. The data stored in the first database 115 and the second database 120 may belong to different data owners. Accordingly, the first device 105 and the second device 110 may be associated with different data owners.

The first device 105 and the second device 110 may communicate via wired and/or wireless means, such as transmitting data and information. Communication in environment 100 may follow any suitable communication protocol, the scope of which is not limited in this respect.

It should be understood that only two devices 105 and 110 and their respective databases 115 and 120 are shown in FIG. 1 for illustrative purposes. In an implementation, the environment 100 may include a plurality of devices that may communicate with each other. Each device may retrieve from one or more databases and store the data in one or more different databases.

It should also be understood that the structure and function of the environment 100 is described for example purposes only and does not imply any limitation to the scope of the present disclosure. For example, depending on the particular implementation, environment 100 may include more or fewer devices, units, modules, components, and / or components.

In environment 100, the first device 105 and the second device 110 may perform an aggregated query of multi-party data in response to a data query request. An example process of aggregating queries for multi-party data will be discussed below in connection with FIG. 2.

FIG. 2 illustrates a multi-party data query process 200 performed by the first device 105 and the second device 110 according to some embodiments of the present disclosure.

As shown in FIG. 2, at 205, the first device 105 may obtain the first data based on a request of the data query, on behalf of a query participant or a computing party. The request for data query may come from any data querying party, such as a data owner associated with the first device 105 or the second device 110 or other third party. The request may be implemented in any suitable manner, for example, may be implemented by a Structured Query Language (SQL) query statement.

The queried data may be any suitable data, such as user data, which may come from different data owners (for example, data owners associated with the first device 105 and the second device 110 and other data owners). The queried data may have a variety of attributes. Each attribute may have one or more values. The request for data query indicates a first data attribute to be classified and aggregated (also referred to as "data attribute to be aggregated" or "attribute to be aggregated"), and at least a second data attribute and a third data attribute for the classification.

The first data may be generated by the first device 105 based on data stored locally or by an associated device (such as the first database 115). In some embodiments, the first data may be generated by encrypting the stored data, thereby further improving data security. For example, the first device 105 may obtain data associated with a second data attribute locally or from the associated first database 115, based on the second data attribute indicated by the request for data query. Then, the first data may be generated by performing a one-bit valid encoding, for example, one-hot encoding, on the stored data based on the value of the second data attribute.

For example, the obtained stored data may be in the form of table (for example, a relationship table), where each column corresponds to one attribute of queried data. As shown in Table 1 below.

Table 1

| ID | Attribute 1 |
|---|---|
| 1 | XY |
| 2 | XX |
| 3 | XX |
| 7 | XY |
| 4 | XY |
| 5 | XY |

In Table 1, attribute 1 represents a second data attribute of which value includes XY and XX. As an example, Table 1 also has an identification (ID) column.

The data in Table 1 may be one-hot encoded based on values of attributes 1, including XY and XX, as shown in Table 2 below.

Table 2

| ID | XY | XX |
|---|---|---|
| 1 | 1 | 0 |
| 2 | 0 | 1 |
| 3 | 0 | 1 |
| 7 | 1 | 0 |
| 4 | 1 | 0 |
| 5 | 1 | 0 |

In Table 1, a value of the attribute 1 of the ID 1 is XY, so after one-hot encoding, for the row where the ID 1 is located, the value of the column element corresponding to the value XY is 1, and the value of the column element corresponding to the value XX is 0, as shown in Table 2. First data, such as relevant data containing attributes 1, is thereby obtained.

In some embodiments, if the first device 105 locally or its associated device maintains the first data attribute to be classified, the first data may further include data associated with the first data attribute.

At 210, the first device 105 obtains a plurality of fragments of the first data by performing a secret fragmentation on the first data, as shown in Table 3 below.

Table 3

| ID | XY | XX |
|---|---|---|
| 1 | <1> | <0> |
| 2 | <0> | <1> |
| 3 | <0> | <1> |
| 7 | <1> | <0> |
| 4 | <1> | <0> |
| 5 | <1> | <0> |

where $\langle ... \rangle$ represents a fragment representation of a variable. Any suitable data fragmentation method or algorithm currently known and developed in the future may be used herein, and the scope of the present disclosure is not limited in this respect.

The second device 110 may perform similar processing as the first device 105. As shown in FIG. 2, at 215, the second device 110 obtains the second data based on the request for data query. The second data at least includes data associated with a third data attribute indicated by the request for data query. In some embodiments, the second data may further include data associated with the first data attribute to be classified and aggregated.

For example, the second device 110 may obtain related data of a third data attribute stored locally or in an associated device (for example, the second database 120), as shown in Table 4 below.

Table 4

| ID | Attribute 2 | Attribute to Aggregate |
|----|-------------|------------------------|
| 1 | AA | 1000 |
| 2 | AA | 5000 |
| 3 | BB | 1500 |
| 9 | CC | 4600 |
| 4 | AA | 3000 |
| 5 | CC | 2000 |

In Table 4, the attribute 2 represents a third data attribute, and values of the third data attribute include AA, BB, and CC. As an example, the second data further includes related data of the to-be-aggregated attribute.

The second data may be generated by performing a one-bit valid encoding (for example, one-hot encoding) on the stored data based on the value of the third data attribute, as shown in Table 5 below.

Table 5

| ID | AA | BB | CC | Attribute to Aggregate |
|----|----|----|----|------------------------|
| 1 | 1 | 0 | 0 | 1000 |
| 2 | 1 | 0 | 0 | 5000 |
| 3 | 0 | 1 | 0 | 1500 |
| 9 | 0 | 0 | 1 | 4600 |
| 4 | 1 | 0 | 0 | 3000 |
| 5 | 0 | 0 | 1 | 2000 |

In Table 4, the value of the attribute 2 of the ID 1 is AA, so after one-hot encoding, the value of the column element corresponding to the value AA is 1, the value of the column element corresponding to the value BB is 0, and the value of the column element corresponding to the value CC is 0, as shown in Table 5. Thus, second data may be obtained, for example, including attribute 2 and related data of the attribute to be aggregated.

At 220, the second device 110 obtains a plurality of fragments of the second data by performing a secret fragmentation on the second data, as shown in Table 6 below.

Table 6

| ID | AA | BB | CC | Attribute to Aggregate |
|----|------|------|------|------------------------|
| 1 | <1> | <0> | <0> | <1000> |
| 2 | <1> | <0> | <0> | <5000> |
| 3 | <0> | <1> | <0> | <1500> |
| 9 | <0> | <0> | <1> | <4600> |
| 4 | <1> | <0> | <0> | <3000> |
| 5 | <0> | <0> | <1> | <2000> |

At block 225, the first device 105 exchanges data fragments with the second device 110. For example, the first device 105 may keep one data fragment of the first data (referred to as "first data fragment") locally, and send another data fragment of the first data (referred to as "fourth data fragment") to the second device 110. Similarly, the second device 110 may keep one data fragment of the second data (referred to as "sixth data fragment") locally, and send another data fragment of the second data (referred to as "second data fragment") to the first device 105.

At block 230, the first device 105 generates a data fragment of a result of the data query (referred to as a "third data fragment") based on the first data fragment of the retained first data and the second data fragment of the second data received from the second device 110. The third data fragment includes an element corresponding to the first data attribute that is classified and aggregated based at least on the second data attribute and the third data attribute.

For example, at the first device 105, the first data fragment (for example, in the form of Table 3) and the second data fragment (for example, in the form of Table 6) may be spliced into the following form:

Table 7

| ID | XY | XX | AA | BB | CC | Attribute to be Aggregated |
|----|------|------|------|------|------|----------------------------|
| 1 | <1> | <0> | <1> | <0> | <0> | <1000> |
| 2 | <0> | <1> | <1> | <0> | <0> | <5000> |
| 3 | <0> | <1> | <0> | <1> | <0> | <1500> |
| 4 | <1> | <0> | <1> | <0> | <0> | <3000> |
| 5 | <1> | <0> | <0> | <0> | <1> | <2000> |

As shown in Table 7, during the splicing process, data alignment may be performed according to the ID. Any suitable data alignment manner may be used, and the scope of the present disclosure is not limited in this respect.

In some embodiments, to generate the third data fragment of the result of data query, the first device 105 may generate, based on the first data fragment of the first data and the second data fragment of the second data, a data fragment (referred to as "seventh data fragment") including the following element corresponding to a plurality of value combinations of the second data attribute and the third data attribute. Then, the first data attribute to be aggregated is classified and aggregated using one value combination as a classification, to generate the third data fragment.

For example, a column of each value (for example, XY, XX) of the first data attribute of the first data fragment (for example, Table 3) may be multiplied with a column of each value (for example, AA, BB, CC) of the second attribute of the second data fragment (for example, Table 6) to obtain the data fragment shown in Table 8 below:

Table 8

| ID | (XY,AA) | (XY,BB) | (XY,CC) | (XX,AA) | (XX,BB) | (XX,CC) |
|----|---------|---------|---------|---------|---------|---------|
| 1 | <1> | <0> | <0> | <0> | <0> | <0> |
| 2 | <0> | <0> | <0> | <1> | <0> | <0> |
| 3 | <0> | <0> | <0> | <0> | <0> | <1> |
| 4 | <1> | <0> | <0> | <0> | <0> | <0> |
| 5 | <0> | <0> | <1> | <0> | <0> | <0> |

where (XY, AA), (XY, BB), (XY, CC), (XX, AA), (XX, BB), and (XX, CC) represent various classifications.

Then, each classification may be multiplied by a corresponding element according to the attribute to be aggregated, and the multiplication result is summed to obtain the third data fragment. In some embodiments, the third data fragment may further include an element indicating whether a value of the aggregated first data attribute is empty for each classification. For example, a counting result of each classification may be calculated to determine whether the classification is empty. The obtained third data fragment is shown in Table 9 below.

Table 9

| Classification | Aggregated Attribute Summing | Flags |
|----------------|------------------------------|-------|
| (XY, AA) | <4000> | <1> |
| (XY, BB) | <0> | <0> |
| (XY, CC) | <2000> | <1> |
| (XX, AA) | <5000> | <1> |

(continued)

| Classification | Aggregated Attribute Summing | Flags |
|---|---|---|
| (XX, CC) | <1500> | <1> |
| (XX, BB) | <0> | <0> |

where < 0 > represents that the classification is null, and < 1 > represents that the classification is not empty.

At 235, the second device 110 generates a data fragment of the result of the data query (referred to as a "fifth data fragment") based on the fourth data fragment of the first data received from the first device 105 and the sixth data fragment of the retained second data. The fifth data fragment includes an element corresponding to the first data attribute that is classified and aggregated based on the fourth data fragment of the first data and the sixth data fragment of the second data. The fifth data fragment may be generated by the second device 110 using a similar operation as the first device 105, and details are not described herein again.

At 240, the first device 105 exchanges data fragments of the result of the data query with the second device 110. For example, the first device 105 sends the third data fragment of the result of the data query to the second device 110, and receives a fifth data fragment of the result of the data query from the second device 110.

At 245, the first device 105 generates a result of the data query based on the third data fragment and the fifth data fragment. For example, the first device 105 may restore the final result based on the third data fragment and the fifth data fragment, and remove the row classified as null, to obtain a final query result, as shown in Table 10.

Table 10

| Classification | Aggregated Attribute Summing |
|---|---|
| (XY, AA) | <4000> |
| (XY, CC) | <2000> |
| (XX, AA) | <5000> |
| (XX, CC) | <1500> |

Correspondingly, the second device 110 may restore the final query result (not shown) based on the locally generated data fragment of the query result and the data fragment received from the first device 105, the specific operation of which is similar to the first device 105, and details are not described herein again.

The aggregation query scheme according to embodiments of the present disclosure is simpler and more efficient, the calculation complexity and the communication complexity of the parties are remarkably reduced, and the safe, reliable and efficient data query is realized.

One example algorithm flow is discussed below. In this example, the secure calculation in the multi-party secure computing scenario is implemented by using the group by keyword in the SQL query statement. Without loss of generality, assume there are 2 participants $P_0$ (for example, associated with the first device 105) and $P_1$ (for example., associated with the second device 110) that each has a respective relationship table. And both $P_0$ and $P_1$ are data owners and computing parties, which complete the federated query on the premise of ensuring privacy. There may be one or more data attributes of group by, and each attribute may belong to a participant $P_0$ or a participant $P_1$. The attribute of the group by is not the result that is jointly calculated by the participant $P_0$ and $P_1$, for example, it may not be the intermediate density data of multi-party computation.

In the setup phase, it is assumed that groups by columns (attributes) of both $P_0$ and $P_1$ are one column (attribute) and are aligned according to the identity identification (ID) column, and then contain N tuples (rows) after alignment. It is assumed that $P_0$ having a relationship table L, column (attribute) of group by is $k_0$, a column (attribute) that needs to be aggregated after group P by is $v_0$. It is assumed that $P_1$ having a relationship table R, a column (attribute) of group by is $k_1$, columns (attributes) that need to be aggregated after group by is $v_1$.

In the local computation phase, $P_0$ performs a one-hot encoding on the column $L[k_0]$ of the relationship table $L = (k_0, v_0)$. For example, the relationship table may be reconstructed to obtain $L = (s_0^0, s_1^0, ..., s_{l_0}^0, v_0)$, where $\{s_i^0, 0 \le i \le l_0\}$ is a value list of $L[k_0]$, and $l_0$ represents the number of values. In some embodiments, data deduplication processing may be performed to remove redundant data.

After one-hot encoding, the value of the attribute $s_i^0$ corresponding to the j-th tuple in the relationship table is

$$L_j\left[s_i^0\right] = \begin{cases} 0 & L_j[k_0] \neq s_i^0 \\ 1 & L_j[k_0] = s_i^0 \end{cases}$$ , where $0 \leq j < N$, $0 \leq i \leq l_0$, N is any suitable positive integer.

Similarly, $P_1$ performs the one-hot encoding on the column $L[k_1]$ of the relationship table $R = (k_1, v_1)$. For example, the relationship table may be reconstructed to obtain $R = (s_0^1, s_1^1, ..., s_{l_1}^1, v_1)$, where $\{s_i^1, 0 \leq i \leq l_1\}$ is a value list of $L[k_1]$ after de-duplicating, and $l_1$ represents the number of values. After the one-hot encoding, the value of the attribute $s_i^1$ corresponding to the j-th tuple in the relationship table is $L_j[s_i^1] = \begin{cases} 0 & L_j[k_1] \neq s_i^1 \\ 1 & L_j[k_1] = s_i^1 \end{cases}$, where $0 \leq j < N$, $0 \leq i \leq l_1$.

In the multi-party computation phase, $P_0$ and $P_1$ perform the secrete fragmentations and exchange data fragments, $P_0$ obtains:

$$\langle T \rangle_0 = \left(\langle s_0^0 \rangle_0, \langle s_1^0 \rangle_0, ... \langle s_{l_0}^0 \rangle_0, \langle s_1^1 \rangle_0, ... \langle s_{l_1}^1 \rangle_0, \langle v_0 \rangle_0, \langle v_1 \rangle_0\right)$$

$P_1$ obtains:

$$\langle T \rangle_1 = \left(\langle s_0^0 \rangle_1, \langle s_1^0 \rangle_1, ... \langle s_{l_0}^0 \rangle_1, \langle s_1^1 \rangle_1, ... \langle s_{l_1}^1 \rangle_1, \langle v_0 \rangle_1, \langle v_1 \rangle_1\right)$$

The query result may be generated using the following classification aggregation algorithm:

---

For $i = \{0, ..., l_0\}$,

- For $j = \{0, ..., l_1\}$,

  - Multiplication operations are performed on elements of corresponding positions of $\langle T[s_i^0] \rangle$ and $\langle T[s_j^1] \rangle$ (corresponding to the first data fragment and the third fragment, respectively), to obtain

  $$\langle T[s_{i,j}] \rangle = \langle T[s_i^0] \rangle \cdot \langle T[s_j^1] \rangle,$$

  - Computing aggregated values $\text{Agg}(\langle T[s_{i,j}] \rangle \cdot \langle T[v_0] \rangle)$ and $\text{Agg}(\langle T[s_{i,j}] \rangle \cdot \langle T[v_1] \rangle)$, where Agg is an aggregation function such as summation, averaging, and averaging

  - Computing a classification flag

  $$\langle f_{i*l_1+j} \rangle = \left(\text{count}(\langle T[s_{i,j}] \rangle \cdot \langle T[v_0] \rangle) > 0\right),\ f_{i*l_1+j}$$ equal to 0 represents the classification is empty, $f_{i*l_1+j}$ equal to 0 represnets that the classification is not empty

  Setting the tuple (row) of the new relational table S $\langle S_{i \cdot l_1+j} \rangle = \left(\langle s_i^0 \rangle, \langle s_j^1 \rangle, \text{Agg}(v_0), \text{Agg}(v_1), \langle f_{i*l_1+j} \rangle\right)$

- End

End

---

A relation table $\langle S \rangle = (\langle c_0 \rangle, \langle c_1 \rangle, \text{Agg}(v_0), \text{Agg}(v_1), \langle f \rangle)$ may be output, where for each tuple of S, corresponding element of $c_0$ and $c_1$ represents the current classification (or "category"), and $\text{Agg}(v_0)$ and $\text{Agg}(v_1)$ represents an aggregated value of the current classification, f represents whether the classification is empty or not.

It should be understood that for purposes of example only and without implying any limitation, the calculation flow of group by under two computing parties is described, but the calculation flow may be applicable to any number of computing parties. It should also be understood that for purposes of example only, and without implying any limitation, a computing flow of only one group by attribute per party is described, but the flow may be applicable to any number of data attributes.

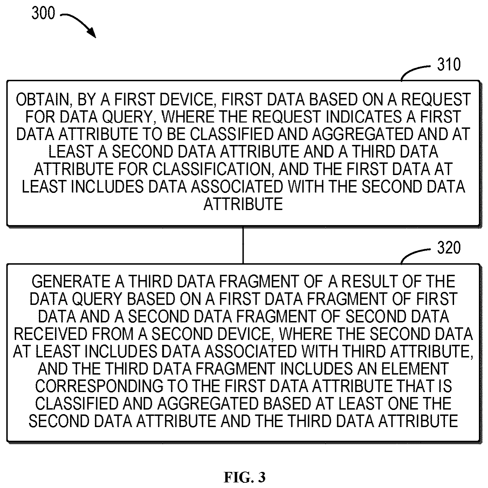

FIG. 3 illustrates a flowchart of an example data query method 300 according to some embodiments of the present disclosure. The method 300 may be implemented at the first device 105 or the second device 110. For ease of discussion, the method 300 will be described from the perspective of the first device 105.

As shown in FIG. 3, at block 310, the first device 105 obtains first data based on a request for a data query, where the request indicates a first data attribute to be classified and at least a second data attribute and a third data attribute for classification, and the first data at least includes data associated with the second data attribute. At block 320, the first device 105 generates a third data fragment of a result of the data query based on the first data fragment of the first data and the second data fragment of the second data received from the second device 110, where the second data at least includes data associated with a third data attribute, and the third data fragment includes an element corresponding to the first data attribute that is classified and aggregated based at least on the second data attribute and the third data attribute.

In some embodiments, the first device 105 may send a fourth data fragment of the first data to the second device 110.

In some embodiments, the first device 105 may receive a fifth data fragment of the result of the data query from the second device 110, where the fifth data fragment includes an element corresponding to the first data attribute that is classified and aggregated based on the fourth data fragment of the first data and the sixth data fragment of the second data. Moreover, the first device 105 may generate a result of the data query based on the third data fragment and the fifth data fragment.

In some embodiments, the first device 105 may obtain stored data associated with the second data attribute based on the request of the data query, and generate the first data by performing a one bit valid encoding on the data based on a value of the second data attribute.

In some embodiments, the first data may also include data associated with the first data attribute to be classified.

In some embodiments, the first device 105 may generate a seventh data fragment based on the first data fragment of the first data and the second data fragment of the second data, where the seventh data fragment includes an element corresponds to a plurality of value combinations of the second data attribute and the third data attribute. The first device 105 may further perform classification and aggregation on the first data attribute by using a value combination as a classification to generate a third data fragment.

In some embodiments, the third data fragment further includes an element indicating whether a value of the aggregated first data attribute is empty for each classification.

In some embodiments, the first device 105 may send the third data fragment to the second device 110 for the second device 110 to generate a result of the data query.

It should be understood that the features related to the operations of the first device 105 and the second device 110 and the corresponding effects discussed above with reference to FIG. 1 and FIG. 2 are also applicable to the method 300, and details are not described herein again.

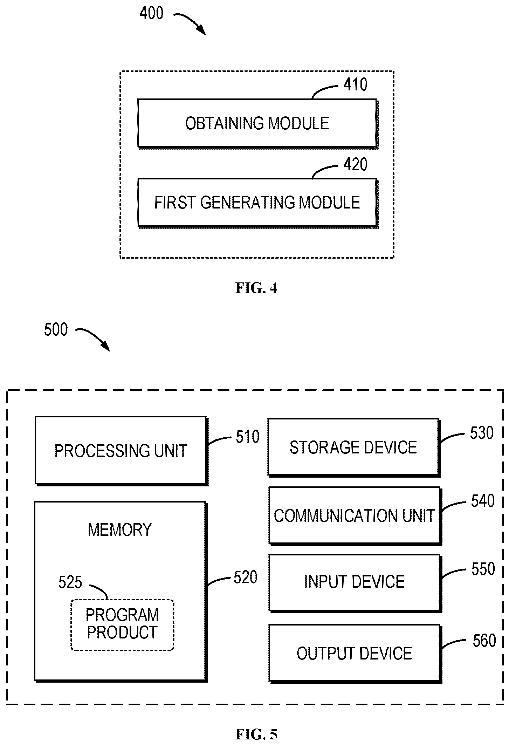

FIG. 4 is a schematic structural block diagram of a data query apparatus 400 according to some embodiments of the present disclosure. The apparatus 400 may be implemented at the first device 105 or the second device 110 in FIG. 1. For ease of discussion, the device 400 will be described from the perspective of the first device 105.

As shown in FIG. 4, the apparatus 400 includes an obtaining module 410 and a first generating module 415. The obtaining module 410 is configured to obtain, by a first device, first data based on a request for a data query, where the request indicates a first data attribute to be classified and aggregated and at least a second data attribute and a third data attribute for classification, and the first data at least includes data associated with the second data attribute. The first generating module 415 is configured to generate a third data fragment of a result of the data query based on a first data fragment of the first data and a second data fragment of the second data received from the second apparatus, where the second data at least includes data associated with the third data attribute, and the third data fragment includes an element corresponding to the first data attribute that is classified and aggregated based on at least the second data attribute and the third data attribute.

In some embodiments, the apparatus 400 may further include a transmitting apparatus configured to transmit a fourth data fragment of the first data to the apparatus.

In some embodiments, the apparatus 400 may further include: a receiving apparatus configured to receive a fifth data fragment of the result of the data query from the apparatus, where the fifth data fragment includes an element corresponding to the first data attribute that is classified and aggregated based on the fourth data fragment of the first data and a sixth data fragment of the second data; and a second generating module configured to generate the result of the data query based on the third data fragment and the fifth data fragment.

In some embodiments, the obtaining module 410 may be further configured to: obtain, based on the request of the data query, stored data associated with the second data attribute; and generate the first data by performing a one-bit valid encoding on the data based on a value of the second data attribute.

In some embodiments, the first data may also include data associated with the first data attribute to be classified and aggregated.

In some embodiments, the first generating module 410 may be further configured to: generate a seventh data fragment based on the first data fragment of the first data and the second data fragment of the second data, where the seventh data fragment includes an element corresponding to a plurality of value combinations of the second data attribute and the third data attribute; and classify and aggregate the first data attribute by using one of the value combinations as a classification to generate the third data fragment.

In some embodiments, the third data fragment may further include an element indicating whether a value of the aggregated first data attribute is empty for each classification.

In some embodiments, the transmitting module may be further configured to transmit the third data fragment to the second device, for generating the result of the data query by the second device.

It should be understood that the features related to the operations of the first device 105 and the second device 110 and the corresponding effects discussed above with reference to FIG. 1 and FIG. 2 are also applicable to the apparatus 400, and details are not described herein again.

FIG. 5 illustrates a block diagram of an electronic device 500 in which one or more embodiments of the present disclosure may be implemented. For example, the electronic device 500 may be configured to implement a data query process according to embodiments of the present disclosure. The electronic device 500 shown in FIG. 5 is merely an example and does not constitute any limitation on the functionality and scope of the embodiments described herein.

As shown in FIG. 5, the electronic device 500 is in the form of a general-purpose electronic device. Components of the electronic device 500 may include, but are not limited to, one or more processors or processing units 510, a memory 520, a storage device 530, one or more communication units 540, one or more input devices 550, and one or more output devices 560. The processing unit 510 may be an actual or virtual processor and capable of performing various processes according to programs stored in the memory 520. In multiprocessor systems, multiple processing units execute computer-executable instructions in parallel to improve parallel processing capabilities of electronic device 500.

Electronic device 500 typically includes a plurality of computer storage media. Such media may be any available media accessible to the electronic device 500, including, but not limited to, volatile and non-volatile media, removable and non-removable media. The memory 520 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 530 may be a removable or non-removable medium and may include a machine-readable medium, such as a flash drive, magnetic disk, or any other medium, which may be capable of storing information and/or data (e.g., training data for training) and may be accessed within electronic device 500.

The electronic device 500 may further include additional removable/non-removable, volatile/non-volatile storage media. Although not shown in FIG. 5, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 520 may include a computer program product 525 having one or more program modules configured to perform various methods or actions of various embodiments of the present disclosure.

The communication unit 540 is configured to communicate with another electronic device through a communication medium. Additionally, the functionality of components of the electronic device 500 may be implemented in a single computing cluster or multiple computing machines capable of communicating over a communication connection. Thus, the electronic device 500 may operate in a networked environment using logical connections with one or more other servers, network personal computers (PCs), or another network node.

The input device 550 may be one or more input devices such as a mouse, a keyboard, a trackball, or the like. The output device 560 may be one or more output devices, such as a display, a speaker, a printer, or the like. The electronic device 500 may also communicate with one or more external devices (not shown) through the communication unit 540 as needed, external devices such as storage devices, display devices, and the like, communicate with one or more devices that enable a user to interact with the electronic device 500, or communicate with any device (e.g., a network card, a modem, etc. ) that enables the electronic device 500 to communicate with one or more other electronic devices. Such communication may be performed via an input/output (I/O) interface (not shown).

According to example implementations of the present disclosure, there is provided a computer-readable storage medium having one or more computer instructions stored thereon, wherein one or more computer instructions are executed by a processor to implement the method described above.

Aspects of the present disclosure are described herein with reference to flowcharts and/or block diagrams of methods, apparatuses (systems), and computer program products implemented in accordance with the present disclosure. It should be understood that each block of the flowchart and/or block diagram, and combinations of blocks in the flowcharts and / or block diagrams, may be implemented by computer readable program instructions.

These computer-readable program instructions may be provided to a processing unit of a general-purpose computer, special purpose computer, or other programmable data processing apparatus to produce a machine, such that the instructions, when executed by a processing unit of a computer or other programmable data processing apparatus, produce means to implement the functions/acts specified in the flowchart and / or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram(s).

The computer-readable program instructions may also be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions / acts specified in the flowchart and / or block diagram block or blocks.

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and / or flowchart, as well as combinations of blocks in the block diagrams and / or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the implementations disclosed herein.

## Claims

1. A method for data query, comprising:

   obtaining first data, by a first device, based on a request for a data query, wherein the request indicates a first data attribute to be classified and aggregated and at least a second data attribute and a third data attribute for the classification, and the first data at least comprises data associated with the second data attribute; and
   generating, based on a first data fragment of the first data and a second data fragment of second data received from a second device, a third data fragment of a result of the data query, wherein the second data at least comprises data associated with the third data attribute, and the third data fragment comprises an element corresponding to the first data attribute that is classified and aggregated based on at least the second data attribute and the third data attribute.

2. The method of claim 1, further comprising:
   transmitting a fourth data fragment of the first data to the second device.

3. The method of claim 2, further comprising:

   receiving a fifth data fragment of the result of the data query from the second device, wherein the fifth data fragment comprises an element corresponding to the first data attribute that is classified and aggregated based on the fourth data fragment of the first data and a sixth data fragment of the second data; and
   generating the result of the data query based on the third data segment and the fifth data segment.

4. The method of claim 1, wherein obtaining the first data comprises:

based on the request for the data query, obtaining stored data associated with the second data attribute; and generating the first data by performing a one-bit valid encoding on the data based on a value of the second data attribute.

5. The method of claim 1, wherein the first data further comprises data associated with the first data attribute to be classified and aggregated.

6. The method of claim 1, wherein generating the third data fragment comprises:

generating a seventh data fragment based on the first data fragment of the first data and the second data fragment of the second data, wherein the seventh data fragment comprises an element corresponding to a plurality of value combinations of the second data attribute and the third data attribute; and classifying and aggregating the first data attribute by using one of the value combinations as a classification, to generate the third data fragment.

7. The method of claim 1, wherein the third data fragment further comprises an element indicating whether a value of the aggregated first data attribute is empty for each classification.

8. The method of claim 1, further comprising:
transmitting the third data fragment to the second device, for generating the result of the data query by the second device.

9. An apparatus for data query, comprising:

an obtaining module configured to obtain first data, by a first device, based on a request for a data query, wherein the request indicates a first data attribute to be classified and aggregated and at least a second data attribute and a third data attribute for the classification, and the first data at least comprises data associated with the second data attribute; and a first generation module configured to generate a third data fragment of a result of the data query based on a first data fragment of the first data and a second data fragment of second data received from a second device, wherein the second data at least comprises data associated with the third data attribute, and the third data fragment comprises an element corresponding to the first data attribute that is classified and aggregated based on at least the second data attribute and the third data attribute.

10. The apparatus of claim 9, further comprising:
a transmitting module configured to transmit a fourth data fragment of the first data to the second device.

11. The apparatus of claim 10, further comprising:

a receiving module configured to receive a fifth data fragment of the result of the data query from the second device, wherein the fifth data fragment comprises an element corresponding to the first data attribute that is classified and aggregated based on the fourth data fragment of the first data and a sixth data fragment of the second data; and a second generating module configured to generate the result of the data query based on the third data segment and the fifth data segment.

12. The apparatus of claim 9, wherein the obtaining module is further configured to:

obtain, based on the request of the data query, stored data associated with the second data attribute; and generate the first data by performing a bit wise encoding on the data based on a value of the second data attribute.

13. The apparatus of claim 9, wherein the first data further comprises data associated with the first data attribute to be classified and aggregated.

14. The apparatus of claim 9, wherein the first generation module is further configured to:

generate a seventh data fragment based on the first data fragment of the first data and the second data fragment of the second data, wherein the seventh data fragment comprises an the element corresponding to a plurality of value combinations of the second data attribute and the third data attribute; and
classify and aggregate the first data attribute by using one of the value combinations as a classification to generate the third data fragment.

15. The apparatus of claim 9, wherein the third data fragment further comprises an element indicating whether a value of the aggregated first data attribute is empty for each classification.

16. The apparatus of claim 9, wherein the transmitting module is further configured to:
transmit the third data fragment to the second device, for generating the result of the data query by the second device.

17. An electronic device, comprising:

at least one processing unit; and
at least one memory coupled to the at least one processing unit and storing instructions for execution by the at least one processing unit, the instructions, when executed by the at least one processing unit, cause the device to perform the method of any of claims 1-8.

18. A computer-readable storage medium having stored a computer program thereon which, when executed by a processor, implements the method according to any of claims 1-8.

FIG. 1

200

105
FIRST
DEVICE

110
SECOND
DEVICE

205
OBTAIN FIRST DATA
BASED ON A REQUEST
FOR DATA QUERY

215
OBTAIN SECOND DATA
BASED ON A REQUEST
FOR DATA QUERY

210
PERFORM A SECRET
FRAGMENTATION ON
THE FIRST DATA

220
PERFORM A SECRET
FRAGMENTATION ON
THE SECOND DATA

225

230
GENERATE A THIRD DATA FRAGMENT
OF A RESULT OF THE DATA QUERY
BASED ON A FIRST DATA FRAGMENT
OF THE FIRST DATA AND A SECOND
DATA FRAGMENT OF THE SECOND
DATA

235
GENERATE A FIFTH DATA FRAGMENT
OF A RESULT OF THE DATA QUERY
BASED ON A FOURTH DATA
FRAGMENT OF THE FIRST DATA AND A
SIXTH DATA FRAGMENT OF THE
SECOND DATA

240

245
GENERATE THE RESULT OF THE DATA
QUERY BASED ON THE THIRD DATA
FRAGMENT AND THE FIFTH DATA
FRAGMENT

**FIG. 2**

300 ⌐

310

OBTAIN, BY A FIRST DEVICE, FIRST DATA BASED ON A REQUEST FOR DATA QUERY, WHERE THE REQUEST INDICATES A FIRST DATA ATTRIBUTE TO BE CLASSIFIED AND AGGREGATED AND AT LEAST A SECOND DATA ATTRIBUTE AND A THIRD DATA ATTRIBUTE FOR CLASSIFICATION, AND THE FIRST DATA AT LEAST INCLUDES DATA ASSOCIATED WITH THE SECOND DATA ATTRIBUTE

320

GENERATE A THIRD DATA FRAGMENT OF A RESULT OF THE DATA QUERY BASED ON A FIRST DATA FRAGMENT OF FIRST DATA AND A SECOND DATA FRAGMENT OF SECOND DATA RECEIVED FROM A SECOND DEVICE, WHERE THE SECOND DATA AT LEAST INCLUDES DATA ASSOCIATED WITH THIRD ATTRIBUTE, AND THE THIRD DATA FRAGMENT INCLUDES AN ELEMENT CORRESPONDING TO THE FIRST DATA ATTRIBUTE THAT IS CLASSIFIED AND AGGREGATED BASED AT LEAST ONE THE SECOND DATA ATTRIBUTE AND THE THIRD DATA ATTRIBUTE

FIG. 3

400

410
OBTAINING MODULE

420
FIRST GENERATING MODULE

**FIG. 4**

500

PROCESSING UNIT — 510

STORAGE DEVICE — 530

COMMUNICATION UNIT — 540

MEMORY

525

PROGRAM PRODUCT

— 520

INPUT DEVICE — 550

OUTPUT DEVICE — 560

**FIG. 5**

# INTERNATIONAL SEARCH REPORT

| | International application No. |
|---|---|
| | PCT/SG2024/050117 |

## A. CLASSIFICATION OF SUBJECT MATTER

*G06F 16/24 (2019.01)   G06F 16/176 (2019.01)   G06F 21/62 (2013.01)   G06F 7/16 (2006.01)*

According to International Patent Classification (IPC)

## B. FIELDS SEARCHED

Minimum documentation searched (classification system followed by classification symbols)

G06F, H04L

Documentation searched other than minimum documentation to the extent that such documents are included in the fields searched

Electronic data base consulted during the international search (name of data base and, where practicable, search terms used)

FamPat, CNKI, IEEE Xplore: 数据查询, 多方, 分类, 聚合, 属性, 分片, 关联, MPC, 独热编码, and other related search terms

## C. DOCUMENTS CONSIDERED TO BE RELEVANT

| Category* | Citation of document, with indication, where appropriate, of the relevant passages | Relevant to claim No. |
|---|---|---|
| X | SEPEHRI, M. et al., Privacy-Preserving Query Processing by Multi-Party Computation. *The Computer Journal*, 12 October 2014, vol. 58, no. 10, pages 2195-2212, [searched on 31 May 2024] <DOI: 10.1093/COMJNL/BXU093>, entire document, in particular pages 2201-2203 | 1-18 |
| A | CN 114090638 A (ALIPAY (HANGZHOU) INFORMATION TECHNOLOGY CO., LTD.), 25 February 2022, entire document | - |

☒ Further documents are listed in the continuation of Box C.          ☒ See patent family annex.

| | |
|---|---|
| *        Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of the issuance of the international search report |
|---|---|
| 31 May 2024 | 05 June 2024 |

| Name and mailing address of the ISA/SG | Authorized officer |
|---|---|
| **Intellectual Property Office of Singapore** 1 Paya Lebar Link, #11-03 PLQ 1, Paya Lebar Quarter Singapore 408533 E-mail: pct@ipos.gov.sg | LIU, Yuanjun (Dr.) IPOS Telephone No. (+65) 6339 8616 |

Form PCT/ISA/210 (second sheet) (July 2022)

**INTERNATIONAL SEARCH REPORT**

| International application No. |
| --- |
| **PCT/SG2024/050117** |

| C (Continuation). DOCUMENTS CONSIDERED TO BE RELEVANT | | |
| --- | --- | --- |
| Category* | Citation of document, with indication, where appropriate, of the relevant passages | Relevant to claim No. |
| A | CN 114726512 A (ALIPAY (HANGZHOU) INFORMATION TECHNOLOGY CO., LTD.), 08 July 2022, entire document | - |
| A | CN 112906904 A (HUAKONG TSINGJIAO INFORMATION TECHNOLOGY (BEIJING) CO., LTD.), 04 June 2021, entire document | - |
| A | CN 113407987 A (ALIPAY (HANGZHOU) INFORMATION TECHNOLOGY CO., LTD.), 17 September 2021, entire document | - |

Form PCT/ISA/210 (continuation of second sheet (1)) (July 2022)

## INTERNATIONAL SEARCH REPORT
Information on patent family members

<table>
<tr><td>International application No.</td></tr>
<tr><td>**PCT/SG2024/050117**</td></tr>
</table>

*Note: related known patent family members of the patent documents referred to by this international search report are listed in this annex. This authority only provides information on the related patent family members, and assumes no responsibility for the details of the patents.*

| Patent Documents referred in the Report | Publication Date/Announcement Date (day/month/year) | Patent Family | Publication Date/Announcement Date (day/month/year) |
|---|---|---|---|
| CN 114090638 A | 25/02/2022 | WO 2023/138379 A1 | 27/07/2023 |
| CN 114726512 A | 08/07/2022 | WO 2023/169081 A1 | 14/09/2023 |
| CN 112906904 A | 04/06/2021 | None | |
| CN 113407987 A | 17/09/2021 | WO 2022/247620 A1 | 01/12/2022 |
| | | US 2024/0095647 A1 | 21/03/2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310189039